# EUROPEAN PATENT SPECIFICATION

(11) **EP 0 832 731 B1**
(45) Date of publication and mention of the grant of the patent: **06.03.2002**
(21) Application number: 97202954.0
(22) Date of filing: 25.09.1997
(51) Int. Cl.: B29C 65/10, B31B 3/64

(54) **Heating device for heat-sealing bottom portions of containers**
Heizgerät zum Heissiegeln von Behälterbodenteilen
Dispositif de chauffage pour le scellage à chaud des parties de fond de récipients

(30) Priority: 27.09.1996 JP 25646496
(43) Date of publication of application: 01.04.1998
(73) Proprietor: Shikoku Kakoki Co., Ltd., Itano-gun Tokushima (JP)
(72) Inventor: Abe, Kazuo, Shikoku Kakoki Co., Ltd., Itano-gun, Tokushima (JP); Kitajima, Hiroshi, Shikoku Kakoki Co., Ltd., Itano-gun, Tokushima (JP); Ueda, Michio, Shikoku Kakoki Co., Ltd., Itano-gun, Tokushima (JP)
(74) Representative: Vollebregt, Cornelis Jacobus, Ir.

(56) References cited:
- US-A- 3 724 093
- US-A- 4 838 009

## Description

### BACKGROUND OF THE INVENTION

The present invention relates to a heating device for heat-sealing the bottom portions of containers for use with tubular blanks of rectangular to square cross section in folding a bottom forming end portion of each blank flat and heat-sealing the folded end portion.

Such heating devices are already known which comprise a primary heater and a secondary heater arranged respectively at a first stop station and a second stop station of bottom forming radial mandrels, each of the mandrels being adapted to carry a tubular blank of rectangular to square cross section as fitted therearound with a bottom forming end portion thereof projecting outward from the mandrel. The primary heater has a primary hot air nozzle, and the secondary heater has a secondary hot air nozzle. The primary hot air nozzle is movable on a phantom outward extension line of the mandrel as halted in the first stop station so as to advance into and retract from the end portion of the blank fitted around the halted mandrel, and has orifices directed toward a plurality of portions uniformly distributed over the entire region to be heated of the end portion when the primary hot air nozzle advances. The secondary hot air nozzle is movable on a phantom outward extension line of the mandrel as halted in the second stop station so as to advance into and retract from the end portion of the blank fitted around the mandrel as halted in the second stop station, and has orifices directed toward a plurality of portions uniformly distributed over the entire region when the secondary hot air nozzle advances.

With the conventional device described, the state of the blank heated with hot air depends on the period of time during which the nozzle is opposed to the blank end portion, and the longer this period of time, the greater is the heated degree. In the course of the advance of the nozzle into the blank end portion, the nozzle is first opposed to the part adjacent to the outer end of the blank and then opposed to an inner part as it is moved inwardly of the blank. Accordingly, the period of time during which the nozzle is opposed to the blank is relatively long at a portion closer to the blank outer end and relatively short at an inner portion. Consequently, the former portion is heated excessively, while the latter portion tends to be heated insufficiently. Thus, it is difficult to uniformly heat the blank over the entire region to be heated. US 3 724 093 discloses a heater for heating the sealing surfaces of carton closure elements. US 4 838 009 discloses a method of heat activacting top closure panels of paperboard carton, whereby 2 heating units can be used.

### SUMMARY OF THE INVENTION

An object of the present invention is to overcome the above problem and to provide a heating device for heat-sealing the bottom portions of containers which is adapted to uniformly heat the entire region to be heated of the blank.

The present invention provides a heating device for heat-sealing bottom portions of containers comprising a primary heater and a secondary heater arranged respectively at a first stop station and a second stop station of bottom forming radial mandrels, each of the mandrels being adapted to carry a tubular blank of rectangular to square cross section as fitted therearound with a bottom forming end portion thereof projecting outward from the mandrel, the heating device being such that the primary heater has a primary hot air nozzle, the secondary heater having a secondary hot air nozzle, the primary hot air nozzle being fixedly provided on a phantom outward extension line of the mandrel as halted in the first stop station so as not to interfere with the end portion of the blank fitted around the halted mandrel and having orifices directed toward local parts of the region of the end portion to be heated, the secondary hot air nozzle being movable on a phantom outward extension line of the mandrel as halted in the second stop station so as to advance into and retract from the end portion of the blank fitted around the mandrel as halted in the second stop station, the secondary hot air nozzle having orifices directed toward a plurality of portions uniformly distributed over the entire region when the secondary hot air nozzle advances.

With the heating device of the invention, the primary heater has a primary hot air nozzle, the secondary heater having a secondary hot air nozzle, the primary hot air nozzle being fixedly provided on a phantom outward extension line of the mandrel as halted in the first stop station so as not to interfere with the end portion of the blank fitted around the halted mandrel and having orifices directed toward local parts of the region of the end portion to be heated, the secondary hot air nozzle being movable on a phantom outward extension line of the mandrel as halted in the second stop station so as to advance into and retract from the end portion of the blank fitted around the mandrel as halted in the second stop station, the secondary hot air nozzle having orifices directed toward a plurality of portions uniformly distributed over the entire region when the secondary hot air nozzle advances. Accordingly, hot air is forced out from the orifices of the primary hot air nozzle against the local parts of the region to be heated of the blank end portion, while hot air is forced out from the orifices of the secondary hot air nozzle against the plurality of portions uniformly distributed over the entire region to be heated.

When the portions which are difficult to heat by the secondary hot air nozzle are heated by the primary hot air nozzle, the entire region of the blank to be heated can be heated uniformly.

When the local parts toward which the orifices of the primary hot air nozzle are directed are the inner parts of four corners of the bottom forming end portion inside thereof, these inner parts of the corners can be heated effectively among other parts of the blank which are difficult to heat.

### BRIEF DESCRIPTION OF THE DRAWINGS

FIG. 1 is a side elevation showing a heating device of the invention along with mandrels;
FIG. 2 is a view in longitudinal section showing a primary heater of the device in detail;
FIG. 3 is a view in section taken along the line III-III in FIG. 2;
FIG. 4 is a perspective view of a hot air nozzle of the primary heater;
FIG. 5 is a perspective view of a secondary heater of the device;
FIG. 6 is a view in vertical section of the secondary heater;
FIG. 7 is a development of the inner side of a blank to show a pattern of portions to be heated by the primary heater;
FIG. 8 is a development of the inner side of the blank to show a pattern of portions to be heated by the secondary heater; and
FIG. 9 is a development of the outer side of the blank to show a pattern of portions to be heated by the secondary heater.

### DESCRIPTION OF THE PREFERRED EMBODIMENT

An embodiment of the invention will be described below with reference to the drawings.

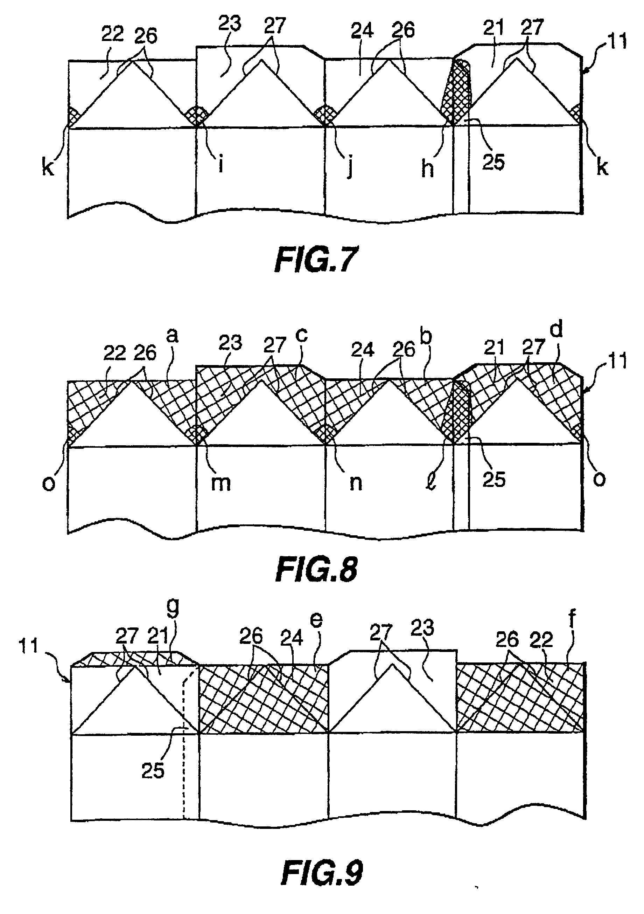

FIGS. 7 and 8 are developments showing a blank as seen from inside, and FIG. 9 is a development showing the blank as seen from outside.

Referring to FIG. 7, the blank 11 shown has four generally rectangular panels, i.e., a second bottom panel 22, third bottom panel 23, fourth bottom panel 24 and first bottom panel 21 which are integral with one another as arranged from left to right, and a striplike fifth bottom panel 25 integral with the right edge of the fourth bottom panel 24 and affixed to the inner surface of the first bottom panel 21.

The second bottom panel 22 and the fourth bottom panel 24 are each formed with a fold-forming score 26 in an inverted V shape. Shown on each of the third bottom panel 23 and the first bottom panel 21 is a V-shaped phantom line 27 approximately identical with the score 26 in form. The portions to be heated are the parts a, b of the second and fourth bottom panels 22, 24 external of their score lines 26 and the parts c, d of the third and first bottom panels 23, 21 external of their phantom lines 27 (indicated by hatching in FIG. 8).

As indicated in FIG. 9 by hatching, the portions of the outer surface of the blank 11 to be heated are the entire areas f, e of the second and fourth bottom panels 22, 24, and the part g of the first bottom panel 21 projecting beyond the fourth bottom panel 24.

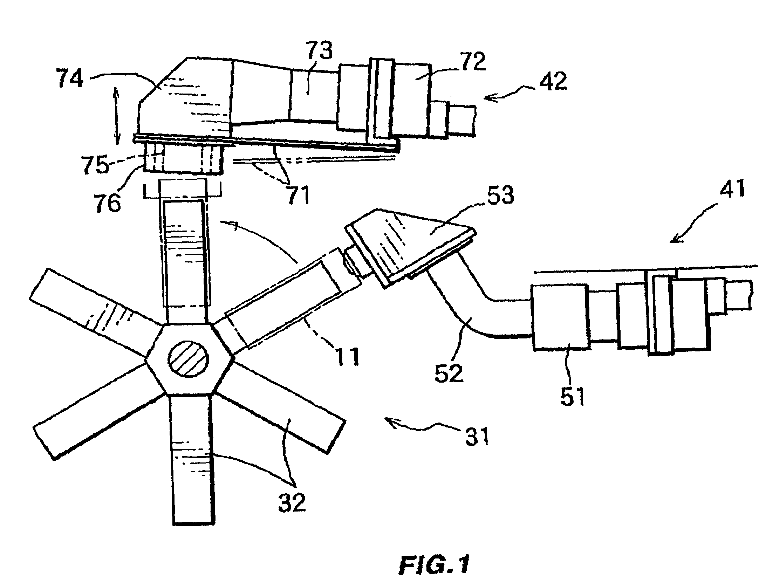

FIG. 1 shows a bottom forming rotor 31. The rotor 31 has six radial mandrels 32 and is drivingly rotated intermittently counterclockwise in FIG. 1 so as to stop each mandrel 32 successively at six stations. The blank 11, which is in the form of a tube having a rectangular to square cross section, is fitted by an unillustrated feeder around the mandrel 32 which is at a halt as directed obliquely rightwardly downward, with the bottom-forming end portion of the blank projecting beyond the mandrel 32. The blank 11 fitted around the mandrel 32 has its fourth bottom panel 24 directed downstream with respect to the direction of rotation of the rotor.

The station where the mandrel 32 is halted as directed obliquely rightwardly upward is a first stop station. The station where the mandrel 32 is halted as directed vertically upward is a second stop station. A primary heater 41 is disposed at the first stop station, and a secondary heater 42 at the second stop station.

The primary heater 41 comprises a heater main body 51 fixedly positioned at the right of the rotor 31, and a hot air nozzle 53 disposed on a phantom outward extension line of the mandrel 32 halted at the first stop station and connected by a duct 52 to the heater main body 51.

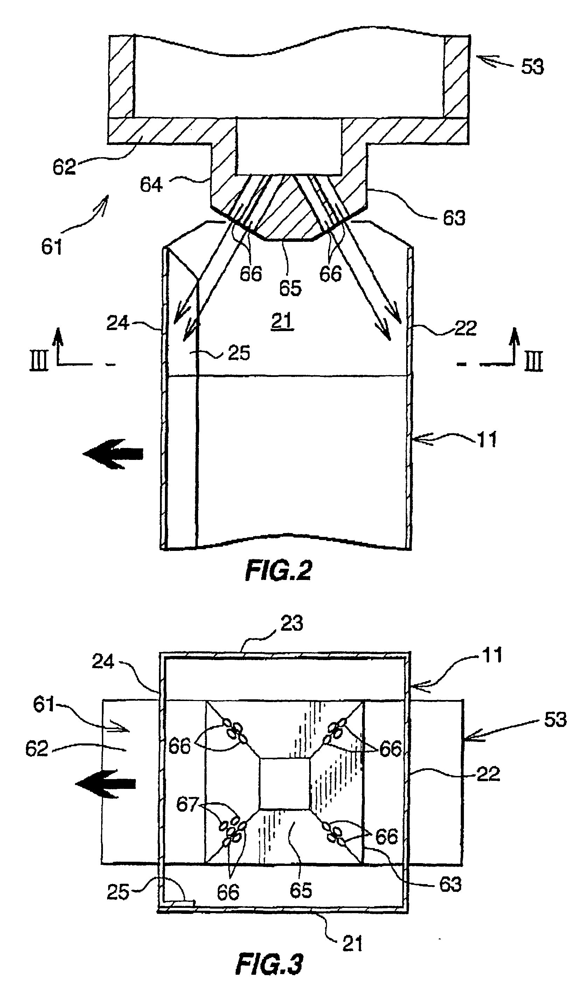

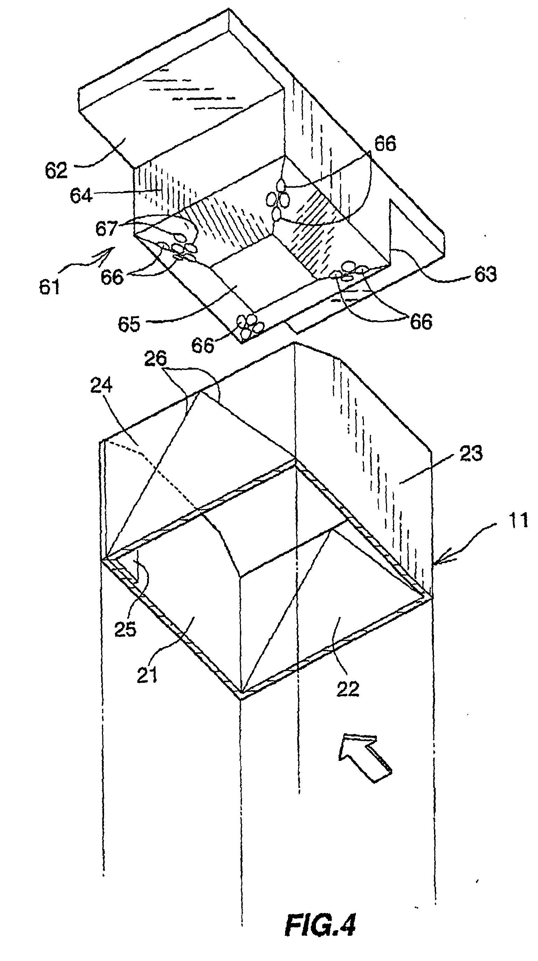

As shown in greater detail in FIGS. 2 to 4, the hot air nozzle 53 has a nozzle body 61 in the form of a closed box. The nozzle body 61 has a bottom wall 62 opposed to the outer end of the halted mandrel 32. The bottom wall 62 is provided with a spout portion 63 generally U-shaped in longitudinal section, projecting toward the mandrel 32 and communicating with the nozzle body 61. The spout portion 63 has a peripheral face 64 having a quadrilateral contour in cross section and similar to the blank in cross section, and a bottom face 65 in the form of a truncated quadrangular pyramid. Each of the four ridgelines of the bottom face 65 is formed with four main orifices 66. Two auxiliary orifices 67 are formed in the bottom face 65 adjacent the four main orifices on the ridgeline opposed to the fifth bottom panel 25. The four groups of four main orifices 65 are oriented toward the innermost portions of the respective four corners of the region of the blank 11 to be heated. The auxiliary orifices 67 are directed toward the fifth bottom panel 25. FIG. 7 shows by hatching the part h to which the auxiliary orifices 67 and the group of main orifices 66 adjacent thereto are directed, and the parts i, j, k to which the remaining three groups of main orifices 66 are directed respectively.

With reference to FIG. 1 again, the secondary heater 42 comprises a pivotal member 71 pivotally movable upward and downward and having a movable end positioned above the outer end of the mandrel 32 as halted in the second stop position, a heater main body 72 mounted on the upper side of right end of the pivotal member 71, a nozzle body 74 in the form of a closed box, mounted on the upper side of left end of the pivotal member 71 so as to be movable toward and away from the mandrel 32 and connected to the heater main body 72 by a duct 73, and a blank inner surface heating hot air nozzle 75 and a blank outer surface heating hot air nozzle 76 which are attached to the underside of left end of the pivotal member 71 and in communication with the nozzle body 74.

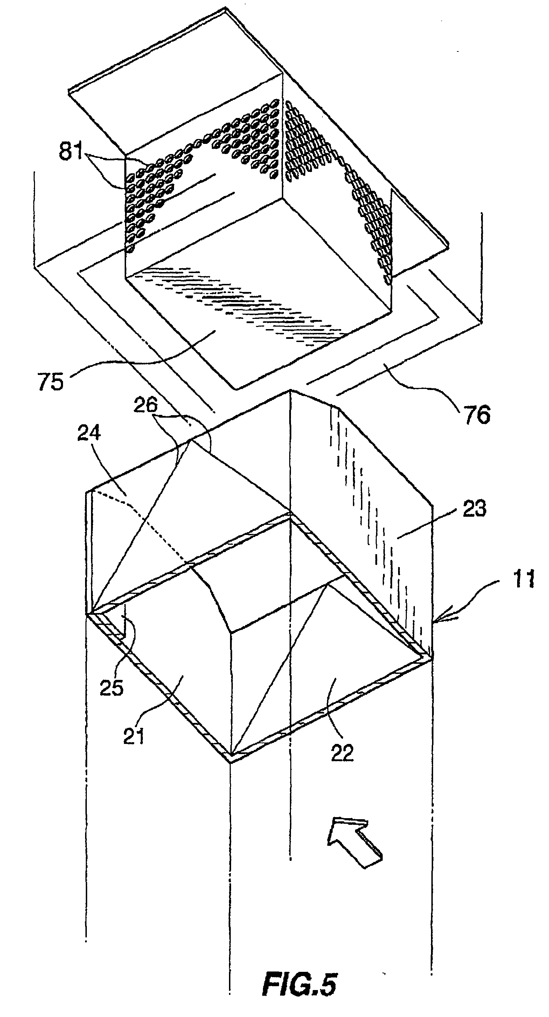

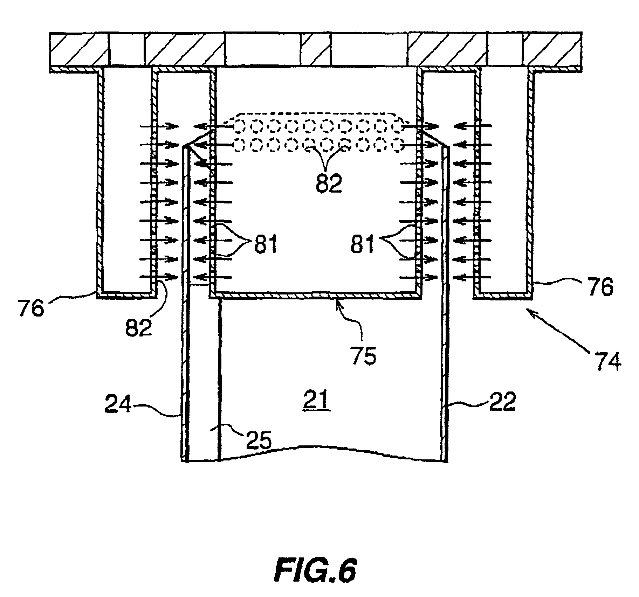

As shown in greater detail in FIGS. 5 and 6, the hot air nozzle 75 for heating the blank inner surface is in the form of a tube having a bottom and a rectangular to square cross section. A multiplicity of orifices 81 arranged at a specified spacing are formed in the four side walls of the nozzle 75 over a region thereof corresponding to the parts (see the hatched parts a, b, c, d in FIG. 8) of the blank to be heated.

The hot air nozzle 76 for heating the blank outer surface is a rectangular to square tube having a bottom and a double wall structure and surrounding the nozzle 75. Among the inner side walls of the nozzle 76, the entire areas of the two side walls to be opposed to the second bottom panel 22 and the fourth bottom panel 24 and a striplike portion of the inner side to be opposed to the first bottom panel 21 are formed with a multiplicity of orifices 82 at a specified spacing like the orifices 81 of the nozzle 75 (see the hatched parts f, e, g in FIG. 9).

The hatched parts h, i, j, k shown in FIG. 7 are heated by the primary heater 41. These parts are local areas of the entire region to be heated. Of these hatched parts h, i, j, k shown in FIG. 7, the part h of the fifth bottom panel 25 is heated entirely from the outer end to the innermost portion because the part h has twice the thickness of the container blank material and is more difficult to heat than the other portion having the single thickness of the blank material. The other hatched parts are the innermost parts of the four corners of the portion providing the bottom portion of the blank 11.

The hatched parts a, b, c, d shown in FIG. 8 are heated by the secondary heater 42. These parts are the entire area of the region to be heated.

In heating the blank by the secondary heater 42, the blank inner surface heating hot air nozzle 75 of the heater 42 is advanced into the outer end of the blank 11 and then retracted therefrom. Accordingly, a portion closer to the outer end of the blank 11 is opposed to orifices 82 for a longer period of time. Consequently, the region to be heated is not heated uniformly in its entirety, but the portion closer to the outer end is heated more intensely, and the intensity of heating decreases from portion to portion away from the outer end. Especially, the parts corresponding to the bottoms of the V-shaped lines representing the boundary between the region to be heated and the other region (the hatched parts of FIG. 7 overlapped by the hatched parts of FIG. 8, i.e., laps l, m, n, o) are difficult to heat, whereas these parts are first heated by the primary heater 41, with the result that the region to be heated becomes uniformly heated in its entirely when heated by the secondary heater 42.

## Claims

1. A heating device for heat-sealing bottom portions of containers comprising a primary heater (41) and a secondary heater (42) arranged respectively at a first stop station and a second stop station of bottom forming radial mandrels (32), each of the mandrels (32) being adapted to carry a tubular blank (11) of rectangular to square cross section as fitted therearound with a bottom forming end portion thereof projecting outward from the mandrel (32), the heating device being such that the primary heater (41) has a primary hot air nozzle (53), the secondary heater (42) having a secondary hot air nozzle (75), the primary hot air nozzle (53) being fixedly provided on a phantom outward extension line of the mandrel (32) as halted in the first stop station so as not to interfere with the end portion of the blank (11) fitted around the halted mandrel (32) and having orifices (66) directed toward local parts h, i, j, k of the region of the end portion to be heated, the secondary hot air nozzle (75) being movable on a phantom outward extension line of the mandrel (32) as halted in the second stop station so as to advance into and retract from the end portion of the blank (11) fitted around the mandrel (32) as halted in the second stop station, the secondary hot air nozzle (75) having orifices (81) directed toward a plurality of portions uniformly distributed over the entire region a, b, c, d when the secondary hot air nozzle (75) advances.

2. A heating device as defined in claim 1 wherein the local parts toward which the orifices (66) of the primary hot air nozzle (53) are directed are the inner parts of four corners of the bottom forming end portion inside thereof.

## Patentansprüche

1. Eine Heizvorrichtung zum Heißsiegeln von Bodenbereichen von Behältern mit einem ersten Heizelement (41) und einem zweiten Heizelement (42), die entsprechend an einer ersten Halteposition und einer zweiten Halteposition von radialen Bodenausbildungsdornen (32) angeordnet sind, wobei jeder dieser Dorne (32) dazu geeignet ist, einen rohrförmigen Rohling (11) mit rechteckigem bis quadratischem Querschnitt zu halten, wenn der Rohling um diesen angeordnet ist, wobei ein Boden bildender Endbereich von diesem nach außen vom Dorn (32) vorsteht, wobei die Heizvorrichtung so ausgebildet ist, daß das erste Heizelement (41) eine erste Heißluftdüse (53) und das zweite Heizelement (42) eine zweite Heißluftdüse (75) aufweist, wobei die erste Heißluftdüse (53) fest an einer äußeren Hilfsverlängerungslinie des Dorns (32) angeordnet ist, wenn dieser in der ersten Halteposition gehalten ist, um nicht mit dem Endbereich des Rohlings (11), der um den angehaltenen Dorn (32) angeordnet ist, in Eingriff zu kommen, und Öffnungen (66) aufweist, die in Richtung lokaler Teile h, i, j, k des zu erwärmenden Abschnittes des Endbereiches gerichtet sind, und wobei die zweite Heißluftdüse (75) an einer äußeren Hilfsverlängerungslinie des Dorns (32) bewegbar ist, wenn dieser in der zweiten Halteposition gehalten ist, um sich in den Endbereich des Rohlings (11), der um den in der zweiten Halteposition positionierten Dorn (32) angeordnet ist, hinein und sich aus diesem zurück zu bewegen, wobei die zweite Heißluftdüse (75) Öffnungen (81) besitzt, die in Richtung einer Mehrzahl von gleichmäßig über den gesamten Bereich a, b, c, d verteilten Abschnitten gerichtet sind, wenn sich die zweite Heißluftdüse (75) vorwärts bewegt.

2. Eine Heizvorrichtung nach Anspruch 1, worin es sich bei den lokalen Bereichen, auf welche die Öffnungen (66) der ersten Heißluftdüse (53) gerichtet sind, um die inneren Teile von vier Ecken des Boden bildungsenden Endbereiches im Innern von diesem handelt.

## Revendications

1. Dispositif de chauffage pour le thermoscellage de parties de fond de récipients, comprenant un organe de chauffage principal (41) et un organe de chauffage secondaire (42) respectivement disposés au niveau d'un premier poste d'arrêt et d'un second poste d'arrêt de mandrins radiaux de formation de fond (32), chacun des mandrins (32) étant adapté pour porter une ébauche tubulaire (11) de section transversale rectangulaire à carrée qui est placée autour de lui en ayant sa partie d'extrémité formant fond qui fait saillie vers l'extérieur du mandrin (32), le dispositif de chauffage étant tel que l'organe de chauffage principal (41) comporte une buse d'air chaud principale (53) et l'organe de chauffage secondaire (42) une buse d'air chaud secondaire (75), la buse d'air chaud principale (53) étant disposée de manière fixe sur une ligne fictive de prolongement vers l'extérieur du mandrin (32) à l'arrêt dans le premier poste d'arrêt afin de ne pas interférer avec la partie d'extrémité de l'ébauche (11) placée autour du mandrin (32) arrêté, et comportant des orifices (66) dirigés vers des portions locales h, i, j, k de la zone de la partie d'extrémité destinée à être chauffée, tandis que la buse d'air chaud secondaire (75) est mobile sur une ligne fictive de prolongement vers l'extérieur du mandrin (32) à l'arrêt dans le second poste d'arrêt afin d'effectuer un mouvement d'avancée et de retrait à l'intérieur et hors de la partie d'extrémité de l'ébauche (11) placée autour du mandrin (32) à l'arrêt dans le second poste d'arrêt, la buse d'air chaud secondaire (75) comportant des orifices (81) qui, lorsqu'elle avance, sont dirigés vers plusieurs portions réparties de manière uniforme sur la totalité de la zone a, b, c, d.

2. Dispositif de chauffage tel que défini dans la revendication 1, dans lequel les portions locales vers lesquelles les orifices (66) de la buse d'air chaud principale (53) sont dirigés sont les portions intérieures de quatre coins de la partie d'extrémité formant fond, à l'intérieur de celle-ci.
